Europäisches Patentamt

(19) European Patent Office

Office européen des brevets

(11) Numéro de publication: **0 248 748 B1**

(12) **FASCICULE DE BREVET EUROPEEN**

(45) Date de publication du fascicule du brevet: **25.10.89**

(21) Numéro de dépôt: **87430020.5**

(22) Date de dépôt: **15.05.87**

(51) Int. Cl.⁴: **B01D 13/04, C01B 13/36**

(54) Procédés de fabrication de membranes minérales et poudre d'oxydes mixtes de titane et de silicium.

(30) Priorité: **30.05.86 FR 8607920**

(43) Date de publication de la demande:
**09.12.87 Bulletin 87/50**

(45) Mention de la délivrance du brevet:
**25.10.89 Bulletin 89/43**

(84) Etats contractants désignés:
**AT BE CH DE ES GB IT LI NL SE**

(56) Documents cités:
EP-A- 0 065 863
EP-A- 0 092 840
EP-A- 0 130 480
EP-A- 0 136 937
EP-A- 0 188 950
FR-A- 1 440 105
FR-A- 1 459 437
FR-A- 2 587 231
US-A- 2 472 831

VIDE,
vol. 40, no. 227, mai-juin-juillet 1985, pages 277-280, Paris, FR; C. GUIZARD et al.: "Utilisation des procédés "sol-gel" pour l'obtention de couches minces céramiques"

(73) Titulaire: **CENTRE MERIDIONAL D'OENOLOGIE Société Anonyme dite:, Zone Industrielle, F-34800 Clermont l'Herault(FR)**

(72) Inventeur: **Castelas, Bernard, Villa NO. 1 La Marquerose 1, Rue de l'Arnel F-34070 Montpellier(FR)**

(74) Mandataire: **Azais, Henri et al, c/o CABINET BEAU DE LOMENIE 14, rue Raphael, F-13008 Marseille(FR)**

(56) Documents cités: (suite)
**Le dossier contient des informations techniques présentées postérieurement au dépôt de la demande et ne figurant pas dans le présent fascicule.**

Description

La présente invention a pour objet des procédés de fabrication de membranes minces, composées d'un réseau minéral d'oxydes de titane et de silicium et des poudres submicroniques obtenues par un des procédés selon l'invention.

Le secteur technique de l'invention est celui de la fabrication de membranes poreuses, microporeuses ou non poreuses.

A ce jour, il existe deux voies principales pour fabriquer des couches minces en céramique composées d'un ou plusieurs oxydes métalliques tels que l'alumine, la silice, l'oxyde de titane, l'oxyde de potassium etc....

Une première méthode consiste à mélanger des poudres très fines de chacun des oxydes correspondants dans des proportions déterminées, puis à les mettre en suspension dans un liant organique ou tout autre liant de façon à obtenir une barbotine apte à être déposée sur un support en couche très mince, avant d'être frittée.

Cette première méthode nécessite, de bien contrôler la granulométrie des poudres d'oxydes ainsi que les propriétés physicochimiques de la barbotine.

Selon que le support sur lequel on dépose la couche mince de barbotine est poreux ou non, la viscosité de la barbotine et sa concentration en produits organiques (liants, plastifiants, tensioactifs....) doivent être contrôlés avec une très grande précision pour permettre une parfaite reproductibilité des caractéristiques physico-chimiques et mécaniques de la couche déposée.

Une deuxième méthode utilise la technique sol-gel qui aboutit à l'obtention d'un sol composé de précurseurs métalorganiques, c'est-à-dire de polymères contenant des noyaux métalliques reliés à des groupes organiques. Par un traitement thermique approprié, on décompose ces polymères pour aboutir aux oxydes métalliques correspondants.

Selon cette deuxième méthode, on forme une solution composée d'hydrates d'oxydes métalliques ou d'alkoxydes métalliques partiellement hydrolisés et on dépose cette solution en couche mince sur un substrat poreux ou non. Cette solution a une viscosité et des caractéristiques bien définies et conduit, par séchage lent à basse température, à un gel polymérique qui est constitué d'un réseau métal-organique parfaitement réticulé.

Après séchage, on soumet la couche mince de gel à un traitement thermique qui la transforme en une membrane mince composée d'oxydes métalliques. Cette deuxième méthode permet d'obtenir des membranes beaucoup plus homogènes et de meilleure qualité que celles qui sont obtenues par la première méthode qui est classique chez les céramistes.

Les procédés selon l'invention s'apparentent aux deux méthodes.

Les procédés selon l'invention permettent de fabriquer des membranes minces qui sont composées d'un réseau minéral d'oxydes de titane et de silicium.

Ils permettent d'obtenir soit une poudre submicronique composée d'oxydes métalliques mixtes dont la granulométrie peut être parfaitement contrôlée et qui permet de fabriquer une barbotine applicable sur un support suivante la première méthode, soit une solution applicable en couche mince sur un support permettant d'obtenir par traitement thermique une membrane dont la porosité peut être contrôlée à volonté à partir des proportions respectives de titane et de silicium.

L'objectif de la présente invention est de procurer des moyens permettant de déposer sur des support des couches submicroniques très réactives permettant d'obtenir, par traitement thermique, des membranes microporeuses ou non, à des températures de frittage inférieures à celles qui sont requises habituellement d'où une économie d'énergie de cuisson et une meilleure porosité.

Un procédé selon l'invention comporte la suite d'opérations suivantes:

— on met en solution dans un alcool anhydre ou dans un alcane un ou plusieurs alkoxydes de titane et un ou plusieurs alkoxydes de silicium dans un rapport déterminé, de façon à obtenir des macromolécules d'alkoxydes mixtes de titane et de silicium;

— on effectue un hydrolyse partielle desdits alkoxydes en ajoutant à ladite solution une solution aqueuse basique ayant un pH compris entre 11 et 12, de sorte que l'on provoque une nucléation contrôlée qui conduit à la formation de copolymères d'alkoxydes de titane et de silicium partiellement hydrolysés, lesquels forment une solution colloidale ou une suspension de particules, qui précipient;

— on élimine par évaporation les groupements alcoyles résiduels en chauffant lentement à une température comprise entre 180°C et 600°C, ce traitement thermique étant réalisé soit sur une couche de ladite solution appliquée sur un substrat, soit sur une poudre constituée par lesdites particules en suspension après avoir séparé celles-ci;

— on chauffe à une température comprise entre 700°C et 1250°C ladite couche de solution ou une couche de barbotine composée de ladite poudre après avoir appliqué ladite couche sur un substrat, de sorte que l'on obtient à la surface dudit substrat, une membrane mince composée d'un réseau minéral d'oxydes de titane et de silicium.

Selon un premier mode de réalisation, un procédé selon l'invention comporte les étapes suivantes:

— on hydrolyse ladite solution d'alkoxydes de titane et de silicium en y ajoutant une quantité de solution aqueuse basique, telle que le rapport entre de molécules d'eau et le nombre de molécules d'alkoxydes de silicium et de titane soit compris entre 2 et 4, de telle sorte que l'on obtient une suspension de particules de copolymères d'alkoxydes de titane et de silicium partiellement hydrolisés;

— on filtre ladite solution pour séparer le précipité;

— on sèche le précipité à température inférieure à 80°C, pour obtenir une poudre;

— on chauffe lentement ladite poudre à une température comprise entre 180°C et 600°C afin d'éliminer les groupements alcoyles résiduels;

— on mélange ladite pudre à de l'eau contenant des liants et des agents tensio-actifs organiques pour former une barbotine;

— on applique une couche mince de ladite barbotine sur un substrat;

– et on chauffe ladite couche à une température comprise entre 700°C et 1250°C, de sorte que l'on obtient par frittage une membrane mince composée d'un réseau minéral d'oxydes de titane et de silicium.

Selon un deuxième mode de réalisation un procédé selon l'invention comporte les étapes suivantes:

– on hydrolyse ladite solution d'alkoxydes de titane et de silicium en y ajoutant une quantité de solution aqueuse basique telle que le rapport entre le nombre de molécules d'eau et le nombre de molécules d'alkoxydes de silicium et de titane soit compris entre 0,5 et 1, de telle sorte que l'on obtient une solution de copolymères d'alkoxydes de titane et de silicium contenant une proportion élevée de groupements alcoyles non hydrolysés:

– on applique sur un substrat une couche mince de cette solution;

– on chauffe lentement à une température comprise entre 180°C et 600°C pour éliminer par évaporation les groupements alcoyles résiduels;

– et on chauffe ensuite à une température comprise entre 700°C et 1250°C pour produire par frittage une membrane composée d'un réseau minéral d'oxydes de titane et de silicium.

Le premier procédé selon l'invention permet d'obtenir un produit nouveau qui est une poudre très fine, composée de grains submicroniques qui contiennent tous un mélange de silice et d'oxyde de titane formant un réseau minéral, de sorte que tous les grains ont la même composition.

L'invention a pour résultat des moyens permettant d'appliquer sur un substrat, par exemple sur une cartouche filtrante en céramique poreuse, une membrane mince ayant une composition très uniforme sur toute son étendue et dont on peut ajuster les paramètres de porosité à partir du choix des alkoxydes de titane et de silicium que l'on mélange et des proportions respectives de ces alkoxydes. Plus on ajoute de silicium, plus le point de fusion est bas, ce qui permet donc d'abaisser la température de frittage.

En utilisant une proportion de silicium élevée, de l'ordre de 75%, on aboutit après cuisson à des membranes entièrement vitrifiées et denses qui peuvent être utilisées pour former des revêtements protecteurs par exemple contre la corrosion ou contre l'abrasion ou comme membranes d'osmose inverse.

Les procédés selon l'invention permettant notamment de fabriquer des membranes poreuses et/ou semi-perméables destinées à servir de surface filtrante pour des cartouches de filtration, de microfiltration d'ultrafiltraion ou d'osmose inverse.

Si l'opération d'hydrolyse par une solution aqueuse basique, qui est l'une des étapes essentielles d'un procédé selon l'invention, est conduite en utilisant une proportion d'eau assez importante, on obtient une suspension de particules de copolymères d'alkoxydes de titane et de silicium, lesquelles particules peuvent être séparées pare filtrage, puis séchées et puis soumises à un traitement thermique qui élimine par évaporation les groupements alsoyles résiduels, de sorte que l'on obtient finalement une poudre très fine composée de grains submicroniques, dans laquelle chaque grain est composé d'un réseau métallique formé de silice et d'oxyde de titane qui conserve la structure des copolymères dont il dérive de sorte que tous les grains ont la même composition et que la silice est donc répartie très uniformément dans la matrice en oxyde de titane.

Cette poudre permet de fabrique une barbotine qui peut être appliquée en couche très mince sur un substrat et qui permet d'obtenir après cuisson une membrane composée d'un réseau métallique de silice et d'oxyde de titane ayant une composition très uniforme dans toute son épaisseur et son étendue.

Cette poudre permet donx de fabriquer par la technique de l'application d'une couche de barbotine des membranes poreuses très minces dont les paramètres de porosité peuvent être ajustés avec une précision bien meilleure que celle que l'on obtient avec des membranes fabriquées de façon traditionnelle, par application sur un substrat, d'une couche de barbotine obtenue en mélangeant simplement des oxydes métalliques.

Un premier procédé selon l'invention se décompose en deux phases principales.

Au cours d'une première phase dont les étapes sont explicitées ci-après, on forme une poudre composée de molécules mixtes d'oxyde de titane et de silicium.

Au cours d'une deuxième phase, on prépare une barbotine que l'on applique en couche mince sur un support et que l'on soumet ensuite à un traitement thermique de frittage.

Le choix de membranes composées de molécules mixtes en oxydes de titane et de silicium est guidé par les propriétés complémentaires de ces deux oxydes.

L'oxyde de titane ($TiO_2$) est connu pour sa grande résistance chimique associée à une excellente résistance mécanique. Il forme la matrice de la couche. Par contre, sa température de frittage est élevée et il est avantageux de l'associer à de l'oxyde de silicium ($SiO_2$) qui fond à température plus basse et qui joue le rôle de fondant. En outre, dans le cas où l'on veut fabriquer des couches semi-perméables destinées à l'osmose inverse, la présence d'oxyde de silicium assure un meilleur transfert sélectif grâce à ses propriétés hydrophiles.

Lorsque la couche minéral est destinée à fabriquer une membrane semi-perméable pour une séparation liquide-liquide, le rapport entre les concentrations de $TiO_2$ et de $SiO_2$ permet d'ajuster la porosité de la membrane. Plus le rapport

$$\frac{[SiO_2]}{[TiO_2]}$$

augmente, plus la porosité diminue jusqu'a devenir nulle lorsque le fondant $SiO_2$ permet de vitrifier totalement la matrice en $TiO_2$, ce que est le cas lorsque $[SiO_2] > 75\%$.

Les procédés selon l'invention permettent de réaliser diverses membranes susceptibles de résoudre des problèmes de microfiltration, d'ultrafiltration ou d'osmose inverse selon le rapport

$$[SiO_2]$$
$$[TiO_2]$$

La granulométrie de la poudre de $TiO_2$ dépend, de façon connue, du type d'alkoxyde de titane utilisé. Cette granulométrie permet de déterminer le diamètre des pores de la membrane. La concentration en $SiO_2$ détermine la porosité ouverte de la membrane, c'est-à-dire le volume poreux efficace.

La première étape des procédés selon l'invention consiste à mélanger dans un solvant alcoolique anhydre ou dans un alcane des alkoxydes de titane et de silicium, par du tétra isopropoxy titane et du tétra éthoxy silane pris dans des proportions déterminées selon la nature de la membrane à fabriquer.

Ces composés organo-métalliques forment des macromolécules de polymères de faible poids moléculaire qui réalisent des enchaînements entre noyaux métalliques qui dépendent des proportions des deux alkoxydes.

On choisit, de préférence, comme solvant alcoolique, l'alcool de degré le plus élevé correspondant aux deux alkoxydes utilisés par exemple l'alcool isopropylique dans le cas ci-dessus.

La deuxième étape des procédés selon l'invention consiste à hydrolyser partiellement le mélange précédent en ajoutant à celui-ci une quantité bien déterminée d'une solution aqueuse basique dont le pH est compris entre 11 et 12.

On sait que les alkoxydes métalliques mis en présence d'eau s'hydrolysent très rapidement à l'exception des alkoxydes de silicium qui ne s'hydrolysent rapidement qu'en présence d'un milieu très basique.

On choisit un pH pour lequel la vitesse d'hydrolyse des alkoxydes de silicium est analogue à la vitesse d'hydrolyse des alkoxydes de titane.

Afin de favoriser une nucléation homogène des grains submicroniques, on choisit un rapport entre le nombre de molécules d'eau $[H_2O]$ et le nombre de molécules de métal $[M]$ compris entre 0,5 et 4.

Si la proportion d'eau est peu élevée, inférieure on égale à une molécule d'eau pour une molécule de métal, le degré d'hydrolyse reste modéré et on obtient une solution, colloidale.

Si la proportion d'eau est plus élevée, de l'ordre de 2 à 4 molécules d'eau par molécule de métal, on obtient une suspension submicronique de grains de polymères dans la phase liquide.

Dans les conditions opératoires ci-dessus, la nucléation est très rapide. Selon le type d'alkoxydes de titane et d'alkoxydes de silicium choisis au départ, par exemple, le tétra isopropoxy orthotitanate $[Ti(OC_3H_7)_4]$ ou le tétra éthoxy ortho-titanate $[Ti(OC_2H_5)_4]$ d'une part et ou le tétraéthoxy silane $[Si(OC_2H_5)_4]$ d'autre part, on peut obtenir par hydrolyse contrôlée une poudre submicronique constituée de grains parfaitement sphériques ou pseudo-sphériques dont le diamètre est compris entre 10 nm et 1000 nm, chaque grain étant composé de macromolécules de copolymères d'alkoxydes de titane et de silicium.

A l'issue de l'opération de nucléation par hydrolyse, on filtre la suspension alcoolique puis on sèche le précipité à une température inférieure à 80°C pendant une durée de l'ordre de 24 heures. On obtient une poudre peu hydratée. Une analyse thermogravimétrique de celle-ci montre qu'à la suite de ce séchage le rapport

$$[H_2O]$$
$$[M]$$

est inférieur à 0,4.

L'hydrolyse n'est pas totale et cette poudre pulvérulente contient encore une certaine quantité de groupements alcoyles.

Un traitement thermique de la poudre d'une durée de 4 heures environ à une température comprise entre 180°C et 600°C permet d'éliminer totalement par évaporation les groupements alcoyles résiduels. On obtient finalement une poudre composée de grains submicroniques, chaque grain étant constitué de macromolécules d'oxydes mixtes de titane et de silicium qui sont reliées entre elles en formant un réseau minéral qui conserve la structure des macromolécules des polymères d'alkoxydes qui résultaient de l'hydrolyse, de sorte que l'oxyde de silicium est réparti très uniformément dans la masse du réseau minéral, ce qui conduit à une très bonne uniformité des propriétés de porosité des membranes.

Pour améliorer l'homogénéïté de la granulométrie de la poudre, on peut procéder à un lavage de la poudre dans une solution aqueuse basique ayant un pH>10. Ce lavage a pour effet d'éviter que les grains ne s'agglomèrent entre eux.

Une fois la poudre composée de grains d'oxydes mixtes de titane et de silicium obtenue par filtrage, séchage et traitement thermique, on passe à la deuxième phase du premier procédé selon l'invention.

La première étape de cette deuxième phase est la confection d'une barbotine très fluide qui est obtenue en mélangeant la poudre à des produits organiques qui servent de liants, de plastifiants et d'agents tensio-actifs.

On obtient ainsi une barbotine liquide qui peut être appliquée sur un support, de façon à revêtir celui-ci ou une partie de celui-ci d'une pellicule de barbotine dont l'épaisseur est inférieure à 50 microns.

Du fait de la grande réactivité de la poudre et de sa finesse, la confection de la barbotine nécessite des précautions destinées à éviter la floculation.

On évite la floculation en utilisant des agents tensioactifs et des liants organiques appropriés par exemple des tensioactifs anioniques et comme liant, soit des alcools polyvinyliques, ou des résines acides polyacryliques ou du polyéthylène glycol.

La barbotine obtenue est une suspension colloïdale stable qui a une viscosité très faible, inférieure à 100 mPas (centipoises) et qui ne décante pas lorsqu'elle n'est plus soumise à une agitation mécanique. Cette propriété typique des poudres submicroniques d'oxydes métalliques permet d'effectuer un dépôt pelliculaire sur des supports poreux ou non poreux car le pouvoir mouillant de la barbotine est très grand.

Une fois le support revêtu d'une pellicule de barbotine, on procède au frittage de la pellicule à une température comprise entre 700°C et 1250°C, de sorte que l'on obtient finalement un support, généralement en céramique, qui est recouvert d'une membrane en céramique, qui peut être plus ou moins poreuse et dont on peut contrôler les paramètres de la porosité à partir du choix des alkoxydes initiaux et des proportions relatives de ceux-ci dans le mélange initial. On peut ainsi fabriquer des cartouches de filtration ou d'ultrafiltration ou des membranes semi-perméables ou non perméables.

On décrit ci-après un exemple de mise en œuvre de l'invention sans aucun caractère limitatif.

EXEMPLES NO. 1.

Fabrication de cartouches de microfiltration tangentielle en céramique revêtue d'une membrane en oxydes mixtes de titane et de silicium.

On mélange dans de l'alcool isopropylique à température ambiante, pendant une heure environ, du tétraéthoxy silane Si(OEt)4 et du tétraisopropoxytitanate Ti(OiPr)4.

Les proportions relatives sont de 6% en mole de Si(OEt)4 pour 94% en mole de Ti(OiPr)4.

La proportion molaire du mélange d'alkoxydes métalliques dans la solution alcoolique est inférieur à 10%.

Le mélange est ensuite hydrolysé en lui ajoutant une solution aqueuse basique dont le pH est égal à 11,5.

On choisit un rapport

$$\frac{[H20]}{[alkoxydes]}$$

c'est-à-dire un rapport entre la concentration en eau et la concentration en alkoxydes de l'ordre de 3.

La polymérisation due à l'hydrolyse est immédiate et elle provoque, dans ce cas, l'apparition d'une suspension de particules de polymères solides. On agite pendant environ 30 minutes puis on filtre la suspension. Le précipité retenu sur le filtre est ensuite séché pendant 24 heures dans une étuve à 80°C, puis il est chauffé à 400°C pendant 4 heures. Avantageusement, la poudre obtenue est lavée par une solution ammoniacale ayant un pH=10 puis à nouveau filtrée et séchée dans les mêmes conditions.

On prépare ensuiste une suspension colloïdale en mélangeant la poudre à de l'eau distillée contenant un tensio-actif anionique. La concentration en agent tensio-actif dépend de la quantité de poudre minérale mise en suspension et la proportion d'agent tensio-actif par rapport à la poudre minérale est inférieure à 1%. On agite vigoureusement pendant 2 heures. On ajoute ensuite un liant organique, par exemple une résine d'acide polyacrylique ayant un ayant moléculaire de 3.000.000 préparée à un taux de concentration de 0,2% en poids.

La proportion de liant organique est égale à celle de la poudre minérale dans la suspension colloïdale. On agite pendant environ 1 heure, après quoi on obtient une suspension très stable qui constitue une barbotine qui peut être appliquée en couche très mince sur un support poreux en céramique. Si ce support a par exemple la forme d'une cartouche de microfiltration tangentielle comportant des canaux tubulaires qui doivent être revêtus intérieurement d'une membrane d'ultrafiltration, on remplit les canaux de barbotine puis on laisse égoutter de sorte que la face interne de chaque canal porte finalement un revêtement de barbotine ayant une épaisseur inférieure à 50 μm.

On place les cartouches dans une étuve et on monte progressivement en température jusqu'à 190°C à raison à raison de 1°C/minute. On maintient cette température pendant une heure. On effectue ensuite une deuxième montée en température jusqu'à 1.150°C à raison de 2°C/minute.

On maintient à la température de 1.150°C pendant 4 heures et on redescend progressivement à la température ambiante en 10 heures.

On obtient finalement des cartouches d'ultrafiltration tangentielle dont les canaux sont revêtus d'une membrane en oxydes mixtes de titane et de silicium formant un réseau. Cette membrane à une épaisseur de 40 μm, un diamètre moyen des pores ouverts mesuré au porosimètre à mercure de 0,3 μm et une porosite ouverte de 20%.

Le premier procédé selon l'invention qui vient d'être décrit comporte la préparation d'une poudre submicronique d'oxydes mixtes de titane et de silicium à partir de laquelle on prépare une barbotine. Cette poudre submicronique est obtenue à partir de l'étape d'hydrolyse des alkoxydes métalliques lorsque l'hydrolyse est suffisamment poussée pour aboutir à une suspension de particules de polymères.

On peut également effectuer une hydrolyse plus modérée, en ajoutant à la solution alcoolique d'alkoxydes métalliques une quantité de solution aqueuse basique plus faible, telle que le rapport entre la concentration en eau et la concentration en alkoxydes soit inférieur à 1. Dans ce cas l'hydrolyse des alkoxydes est incomplète et on obtient un liquide contenant en solution des macromolécules de polymères mixtes d'alkoxydes de titane et de silicium.

Cette solution contient des précurseurs métalorganiques, c'est-à-dire des copolymères d'alkoxydes de titane et de silicium contenant une proportion élevée de groupements alcoyles résiduels non hydrolysés.

Cette solution a une viscosité et des caractéristiques bien définies et elle peut être déposée en couche mince directement sur un substrat poreux ou non. Par séchage, on obtient ensuite un gel polymérique qui est constitué d'un réseau-organique parfaitement réticulé. Un traitement thermique ultérieur permet d'éliminer les groupements alcoyles résiduels après quoi on obtient par frittage, une membrane composée d'oxydes mixtes de titane et de silicium qui conserve la structure réticulée du réseau métalorganique.

EXEMPLES NO. 2.

Dépôt sur un substrat d'une couche mince dense entièrement vitrifiée.

On procède d'abord à une hydrolyse partielle de tétraméthoxy silane en solution dans le l'hexane en ajoutant à ladite solution une solution aqueuse basique ayant un pH=11,5. La proportion de solution aqueuse utilisée correspond à une mole d'eau pour une mole de tétraméthoxysilane.

On obtient ainsi une hydrolyse partielle que l'on peut représenter par la réaction ci-après:

Si(OMe)4 + H₂O → SiOH(OMe)3 + MeOH.

Au mélange ainsi hydrolysé, on ajoute du tétraisopropoxy orthotitane Ti(OiPr)4 à raison d'une mole de Ti(OiPr) 4 pour 4 moles d'alkoxyde de silicium.

On obtient ainsi des macromolécules de triméthoxysilyloxyde de titane suivant la réaction:

Ti(OiPr)4 + 4 SiOH(OMe)3 ⇌ Ti [Osi(OMe)3]4 + 4iPrOH.

Ce triméthoxysilyloxyde de titane est un précurseur qui existe en solution sous la forme d'un polymère dont le degré de polymérisation relativement faible et la stabilité augmentent avec le taux d'hydrolyse;

Il est donc intéressant d'augmenter le taux d'hydrolyse et pour cela, on ajoute de la solution aqueuse basique à pH=11,5 à raison d'une mole d'eau supplémentaire pour une mole de triméthoxysilyloxyde de titane qui conduit à l'équilibre:

Ti [OSi(OMe)3] 4 + H₂O ⇌ [TiO$_x$(OSiMe)4 - 2x] n formule dans laquelle n est le degré de polymérisation et x le taux d'hydrolyse que l'on a atteint à l'équilibre.

On obtient ainsi une solution à laquelle on ajoute deux molécules d'un diol, par exemple du 2 méthyl -2-4 pentanediol, lequel est destiné à défonctionnaliser une partie des groupements réactifs situés en bout de chaîne qui sont susceptibles de subir une hydrolyse ultérieure qui est indésirable car elle conduirait à des macromolécules de polymères donc à la formation de grains trop gros.

On ajoute ensuite à cette solution un liant organique par exemple 5% en poids de polyéthylène glycol.

On obtient ainsi un liquide qui peut être appliqué directement en couche mince sur un support poreux ou non, puis débarrassé des groupements organiques résiduels par un traitement thermique parfaitement contrôlé, ce qui permet d'éviter de passer par l'intermédiaire d'une poudre et d'une barbotine.

Le traitement thermique en étuve de la couche appliquée sur un substrat comporte les étapes suivantes:

— séchage pendant 48 heures à la température ambiante du substrat sur lequel la solution a été appliquée en couche mince pour évaporer le solvant;

— montée en température très lente jusqu'à environ 200°C à raison de 0,1°C par minute.

— palier de 4 heures environ à 200°C.

— deuxième montée en température jusqu'à 700°C environ à raison de 0,5°C/minute.

— deuxième palier de 4 heures à 700°C.

— descente lente jusqu'à la température ambiant en 10 heures environ.

La première montée en température jusqu'à 200°C permet de débarrasser la solution des groupements alcoyles résiduels. C'est l'étape dite de nucléation à l'issue de laquelle on obtient une couche composée d'un réseau de molécules mixtes d'oxydes de titane et de silicium liées entre elles pour former des structures qui conservent l'architecture des macromolécules de polymères de polyalkylsilyloxyde de titane.

La deuxième montée en température correspond à la phase de frittage.

Dans cet exemple où la proportion d'oxyde de silicium est élevée (75%), on obtient après frittage une couche vitrifiée, dense, ayant une épaisseur de 5 µm qui sert par exemple comme membrane d'osmose inverse.

**Revendications**

1. Procédé de fabrication de membranes minces composées d'un réseau minéral d'oxydes de titane et de silicium, caractérisé par la suite d'opérations suivantes :

- on met en solution dans un alcool anhydre ou dans un alcane un ou plusieurs alkoxydes de titane et un ou plusieurs alkoxydes de silicium dans un rapport déterminé, de façon à obtenir des macro-molécules d'alkoxydes mixtes de titane et de silicium;

- on effectue une hydrolyse partielle desdits alkoxydes mixtes en ajoutant à ladite solution une solution aqueuse basique ayant un pH compris entre 11 et 12, de sorte que l'on provoque une nucléation contrôlée qui conduit à la formation de copolymères d'alkoxyds de titane et de silicium partiellement hydrolysés, lesquels forment une solution si le rapport entre le nombre de molécules d'eau et le nombre de molécules de métal est compris entre 0,5 et 1 ou une suspension de particules, si ce rapport est compris entre 2 et 4;

- on élimine par évaporation les groupements alcoyles résiduels en chauffant lentement à une température comprise entre 180°C et 400°C, ce traitement thermique étant réalisé soit sur une couche de ladite solution appliquée sur un substrat, soit sur une poudre constituée par lesdites particules en suspension après avoir séparé celles-ci;

- on chauffe à une température comprise entre 700°C et 1250°C ladite couche de solution ou une couche de barbotine composée de ladite poudre après avoir appliqué ladite couche sur un substrat, de sorte que l'on obtient à la surface dudit subsstrat une membrane mince composée d'un réseau minéral d'oxydes de titane et de silicium.

2. Procédé selon la revendication 1 caractérisé en ce que ladite hydrolyse est effectuée en ajoutant à ladite solution d'alkoxydes de titane et de silicium une quantité de solution aqueuse basique telle que le rapport [H₂O]/[M] entre le nombre de molécules d'eau et le nombre de molécules d'alkoxydes de silicium et de titane est compris entre 0,5 et 4.

3. Procédé selon la revendication 1, caractérisé par la suite d'opérations suivantes :

- on hydrolyse ladite solution d'alkoxydes de titane et de silicium en y ajoutant une quantité de solution aqueuse basique, telle que le rapport [H₂O]/[M] entre le nombre de molécules d'eau et le nombre de molécules de métal soit compris entre 2 et 4, de telle sorte que l'on obtient une suspension de particules de copolymères d'alkoxydes de titane et de silicium partiellement hydrolysées qui précipitent.

- on filtre ladite solution pour séparer le précipité;
- on sèche le précipité à température inférieure à 80°C, pour obtenir une poudre;
- on chauffe lentement ladite poudre à une température comprise entre 180°C et 600°C afin d'éliminer les groupements alcoyles résiduels;
- on mélange ladite poudre à de l'eau contenant des liants et des agents tensio-actifs organiques pour former une babotine;
- on applique une couche mince de ladite barbotine sur un substrat;
- et on chauffe ladite couche à une température comprise entre 700°C et 1250°C, de sorte que l'on obtient par frittage une membrane mince composée d'un réseau minéral d'oxydes de titane et de silicium.

4. Procédé selon la revendication 2 caractérisé par les étapes suivantes:
- on hydrolyse la dite solution d'alkoxydes de titane et de silicium en y ajoutant une quantité aqueuse basique telle que le rapport entre le nombre de molécules d'eau et le nombre de molécules d'alkoxydes de silicium et de titane soit compris entre 0,5 et 1, de telle sorte que l'on obtient une solution de copolymères d'alkoxydes de titane et de silicium contenant une proportion élevée de groupements alcoyles non hydrolysés;
- on applique sur un substrat une couche mince de cette solution;
- on chauffe lentement à une température comprise entre 180°C et 600°C pour éliminer par évaporation les groupements alcoyles résiduels;
- et on chauffe ensuite à une température comprise entre 700°C et 1250°C pour produire par frittage une membrane composée d'un réseau minéral d'oxydes de titane et de silicium.

5. Procédé selon l'une quelconque des revendications 1 à 4 caractérisé en ce que le rapport entre le nombre de molécules d'alkoxydes de silicium et le nombre de molécules d'alkoxydes de titane est au moins égal à 0,06.

6. Procédé selon l'une quelconque des revendications 1 à 5 caractérisé en ce que ledit alkoxyde de titane est du tétraisopropoxyorthotitanate ou du tétra éthoxy ortho titanate.

7. Procédé selon l'une quelconque des revendications 1 à 5 caractérisé en ce que ledit alkoxyde de silicium est du tétra méthoxy silane ou du tétra éthoxy silane.

8. Produit constitué par une poudre très fine composée de grains submicroniques qui contiennent tous un mélange de silice et d'oxyde de titane formant un réseau minéral, de sorte que tous les grains ont la même composition, laquelle poudre permet de fabriquer une barbotine qui est appliquée en couche mince sur un substrat puis frittée pour être transformée en une membrane mince composée d'un réseau minéral d'oxydes de titane et de silicium.

**Patentansprüche**

1. Verfahren zur Herstellung von dünnen Membranen, die von einem Mineralgitter aus Titan- und Siliziumoxiden gebildet sind, gekennzeichnet durch die Folge der nachstehenden Verfahrensschritte:
- man bringt ein oder mehrere Titanalkoxide und ein oder mehrere Siliziumalkoxide in einem bestimmten Verhältnis in einem wasserfreien Alkohol oder in einem Alkan derart in Lösung, daß man gemischte Makromoleküle aus Titan- und Siliziumalkoxiden erhält,
- man nimmt eine partielle Hydolyse der gemischten Alkoxide vor, indem man zu der obigen Lösung eine wässerige basische Lösung mit einem pH zwischen 11 und 12 zugibt, so daß man eine kontrollierte Nukleation bewirkt, die zur Bildung von teilweise hydrolysierten Copolymeren aus Titan- und Siliziumalkoxiden führt, welche eine kolloidale Lösung oder Suspension von ausfallenden Teilchen bilden;
- man entfernt die restlichen Alkylgruppen durch Abdampfen unter langsamem Erhitzen auf ein Temperatur zwischen 180°C und 600°C, welche Wärmebehandlung entweder auf einer Schicht der auf ein Substrat aufgetragenen Lösung oder auf einem aus den in Suspension befindlichen Teilchen nach Abtrennen derselben bestehenden Pulver durchgeführt wird,
- man erhitzt die Lösungsschicht oder eine aus besagtem Pulver bestehende Schlammschicht nach Auftragen der Schicht auf ein Substrat auf eine Temperatur zwischen 700°C und 1250°C, sodaß man an der Oberfläche des Substrats eine dünne Membran, gebildet von einem Mineralgitter aus Titan- und Siliziumoxiden, erhält.

2. Verfahren nach Anspruch 1, dadurch gekennzeichnet, daß die Hydrolyse unter einer derartigen Zugabe einer Menge einer wässerigen basischen Lösung zu Lösung aus Titan- und Siliziumoxiden erfolgt, daß das Verhältnis $[H_2O]/[M]$ zwischen der Anzahl an Wassermolekülen und der Anzahl an Silizium- und Titanalkoxidmolekülen zwischen 0,5 und 4 liegt.

3. Verfahren nach Anspruch 2, gekennzeichnet durch die Folge der nachstehenden Verfahrensschritte:
- man hydrolysiert die Lösung aus Titan- und Siliziumalkoxiden durch Zugabe einer Menge einer wässerigen basischen Lösung derart, daß das Verhältnis $[H_2O]/[M]$ zwischen der Anzahl an Wassermolekülen und der Anzahl an Silizium- und Titanalkoxidmolekülen zwischen 2 und 4 liegt, sodaß man eine Teilchensuspension aus teilweise hydrolsierten Titan- und Siliziumalkoxid-Copolymeren erhält, welche ausfallen,
- man filtriert die Lösung zur Abtrennung des Niederschlags,
- man trocknet den Niederschlag bei einer Temperatur von unter 80°C zur Gewinnung eines Pulvers,
- man erhitzt das Pulver langsam auf eine Temperatur zwischen 180°C und 600°C zur Entfernung restlicher Alkylgruppen,
- man mischt das Pulver mit Wasser, enthaltend Bindemittel und organische grenzflächenaktive Mittel, zur Bildung eines Schlamms,

– man bringt eine dünne Schicht des Schlamms auf ein Substrat auf,

– und man erhitzt die Schicht auf eine Temperatur zwischen 700°C und 1250°C, so daß man durch Sintern eine dünne Membran, gebildet von einem Mineralgitter aus Titan- und Siliziumoxiden, erhält.

4. Verfahren nach Anspruch 2, gekennzeichnet durch die folgenden Schritte:

– man hydrolysiert die Lösung aus Titan- und Siliziumalkoxiden, indem man eine wässerige basische Lösung derart zugibt, daß das Verhältnis zwischen der Anzahl an Wassermolekülen und der Anzahl an Silizium- und Titanalkoxiden zwischen 0,5 und 1 liegt, sodaß man eine Lösung aus Titan- und Siliziumalkoxid-Copolymeren erhält, die einen erhöhten Anteil an nicht hydrolysierten Alkylgruppen enthält,

– man bringt eine dünne Schicht dieser Lösung auf ein Substrat auf,

– man erhitzt langsam auf eine Temperatur zwischen 180°C und 600°C zur Entfernung der restlichen Alkoylgruppen durch Verdampfen,

– und man erhitzt danach auf eine Temperatur zwischen 700°C und 1250°C zur Erzeugung einer Membran, gebildet von einem Mineralgitter aus Titan- und Siliziumoxiden, durch Sintern.

5. Verfahren nach einem der Ansprüche 1 bis 4, dadurch gekennzeichnet, daß das Verhältnis zwischen der Anzahl an Siliziumalkoxidmolekülen und der Anzahl an Titanalkoxidmolekülen mindestens gleich 0,06 ist.

6. Verfahren nach einem der Ansprüche 1 bis 5, dadurch gekennzeichnet, daß das Titanalkoxid Tetraisopropoxyorthotitanat oder Tetraethoxyorthotitanat ist.

7. Verfahren nach einem der Ansprüche 1 bis 5, dadurch gekennzeichnet, daß das Siliziumalkoxid Tetramethoxysilan oder Tetraethoxysilan ist.

8. Produkt, bestehend aus einem sehr feinen Pulver, welches aus submikronischen Körnchen gebildet ist, die alle eine ein Mineralgitter bildende Mischung aus Kieselerde und Titanoxid in einer Weise enthalten, daß sämtliche Körnchen dieselbe Zusammensetzung haben, welches Pulver die Herstellung eines Schlamms ermöglicht, der in einer dünnen Schicht auf ein Substrat aufgebracht und dann zur Umwandlung in eine dünne Membran, gebildet von einem Mineralgitter aus Titan- und Siliziumoxiden, gesintert wird.

## Claims

1. A process for manufacturing thin membranes composed of an inorganic lattice of titanium and silicon oxides, characterized by the following successive steps of:

– placing in solution in an anhydrous alcohol or in an alkane one or more titanium alkoxides and one or more silicon alkoxides in a determined ratio, so as to obtain macro-molecules of mixed alkoxides of titanium and silicon;

– effecting partial hydrolysis of said mixed alkoxides by adding to said solution a basic aqueous solution having a pH of between 11 and 12, with the result that a controlled nucleation is provoked, which leads to the formation of partially hydolyzed copolymers of titanium and silicon alkoxides, which form a colloidal solution or a suspension of particles, which precipitate;

– eliminating by evaporation the residual alkyl groups by slowly heating to a temperaure of between 180°C and 600°C, this thermal treatment being effected either on a layer said solution applied on a substrate, or on a powder constituted by said particles in suspension after having separated them;

– heating to a temperature of between 700°C and 1250°C said layer of solution or a layer of slip composed of said powder after having applied said layer on a substrate, with the result that a thin membrane is obtained on the surface of said substrate, composed of an inorganic lattice of titanium and silicon oxides.

2. The process according to claim 1, characterized in that the said hydrolysis is effected by adding to the said solution of titanium and silicon alkoxides such a quantity of basic aqueous solution that the ration $[H_2O] / [M]$ between the number of molecules of water and the number of molecules of silicon and titanium alkoxides is included between 0.5 and 4.

3. The process according to claim 2, characterized by the following successive operations:

– hydrolyzing said solution of titanium and silicon alkoxides by adding thereto such a quantity of basic aqueous solution that the ratio $[H_2O]/[M]$ between the number of molecules of water and the number of molecules of silicon and titanium alkoxides is included between 2 and 4 with the result that a suspension of particles of parially hydrolyzed copolymers of titanium and silicon alkoxides, which precipitate, is obtained;

– filtering said solution in order to separate the precipitate;

– drying the precipitate at a temperature lower than 80°C, in order to obtain a powder;

– slowly heating said powder to a temperature of between 180°C and 600°C in order to eliminate the residual alkyl groups;

– mixing said powder with water containing binding agents and organic surface-active agents in order to from a slip;

– applying a thin layer of said slip on a substrate;

– and heating said layer to a temperature of between 700°C and 1250°C, with the result that a thin membrane is obtained by sintering, composed of an inorganic lattice of titanium and silicon oxides.

4. The process according to claim 2, characterized by the following steps:

– hydrolyzing said solution of titanium and silicon alkoxyides by adding thereto such a quantity of basic aqueous solution that the ratio between the number of molecules of water and the number of molecules of silicon and titanium alkoxides is included between 0.5 and 1, with the result that a solution of copolymers of titanium and silicon alkoxides is obtained, containing a high proportion of non-hydrolyzed alkyl groups;

– applying on a substrate a thin layer of this solution;

– slowly heating to a temperature of between 180°C and 600°C in order to eliminate by evaporation the residual alkyl groups;

– and then heating to a temperature of between 700°C and 1250°C in order to produce by sintering a membrane composed of an inorganic lattice of titanium and silicon oxides.

5. The process according to any one of claims 1 to 4, characterized in that the ratio between the number of molecules of silicon alkoxides and the number of molecules of titanium alkoxides is at least equal to 0.06.

6. The process according to any one of claims 1 to 5, characterized in that said titanium alkoxide is tetraisopropoxyorthotitanate or tetra ethoxy ortho titanate.

7. The process according to any one of claims 1 to 5, characterized in that said silicon alkoxide is tetra methoxy silane or treta ethoxy silane.

8. A product constituted by a very fine powder composed of submicronic grains which all contain a mixture of silica and of titanium oxide forming an inorganic lattice, with the result that all the grains have the same composition, which powder makes it possible to manufacture a slip which is applied in thin layer on a substrate then sintered in order to be converted into a thin membrane composed of an inorganic lattice of titanium and silicon oxides.